# EUROPEAN PATENT APPLICATION

(11) **EP 1 524 663 A1**
(43) Date of publication of application: **20.04.2005**
(21) Application number: 04300474.6
(22) Date of filing: 26.07.2004
(51) Int. Cl.: G11B 20/10

(54) **Defect handling for recording media**

(30) Priority: 14.10.2003 EP 03023073
(71) Applicant: Thomson Licensing S.A., 92100 Boulogne-Billancourt (FR)
(72) Inventor: Kochale, Axel, 31832 Springe (DE); Schäfer, Ralf-Detlef, 29221 Celle (DE)
(74) Representative: Rittner, Karsten, Dr.

(57) **Abstract**

Method for handling defects on a recording medium during bit recovery from the recording medium, whereby a data stream (hf) read from the recording medium is processed by an adaptive bit recovery means (7).

## Description

The present invention relates to a method and a device for handling defects on recording media during bit recovery, and to an apparatus for reading from and/or writing to recording media using such method or device.

Contrary to data recording devices like harddisks most optical recording devices provided as consumer electronics operate with interchangeable media such as compact disks (CD), digital versatile disks (DVD), or Blu-ray disks (BD), which are not always protected in a casing. Therefore, defects on the surface of the recording media occur, which strongly deteriorate data retrieval from a recording medium. Though in the following reference is mainly made to optical recording media, the principle of the invention is likewise applicable to other types of recording media.

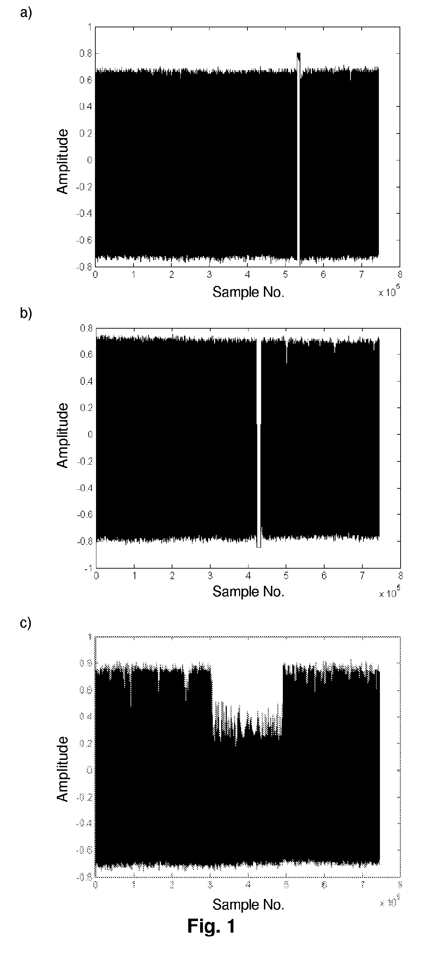

Some of the possible defects comprise fingerprints, silver dots or black dots, and scratches (radial, tangential,...). Typical waveforms of retrieved data patterns having such defects are shown in Fig. 1. Part a) shows the waveform of a silver dot, which is a spot on a recording medium having an increased reflectivity. Consequently, the signal amplitude is also increased. Correspondingly, in part b) the waveform of a black dot is shown, i.e. a spot having a reduced reflectivity. In this case the signal amplitude is also reduced. Finally, in part c) the waveform of a fingerprint is depicted. The signal amplitude is also reduced, but less than in the case of a black dot. However, as can be seen from the figure the defect extends over a much larger number of data samples.

In order to prevent large phases of data misdetection due to error propagation, additional means inside a data recovery circuit are required for dealing with such defects.

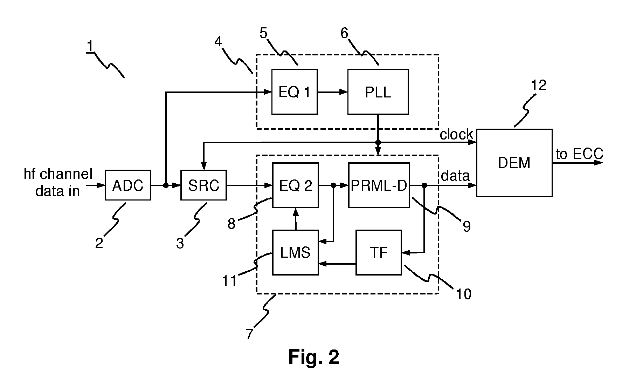

A typical architecture of a data recovery circuit 1 is depicted in Fig. 2. Data from a recording medium (not shown) are captured as a high frequency channel data stream hf. This data stream hf is digitized, i.e. sampled by an analog-to-digital converter (ADC) 2, and resampled by a sample rate converter (SRC) 3. To accomplish optimal sampling the corresponding channel clock is recovered independently by a clock recovery block 4 comprising an equalizer (EQ 1) 5 and a phase locked loop (PLL) 6. The data stream hf is further supplied to a bit recovery block 7, which provides some kind of adaptivity for matching the bit detection to the incoming data stream hf. In the figure an adaptive partial response maximum likelihood detector (PRML-D) 9 is employed preceded by an equalizer(EQ 2) 8, which receives updated coefficients from a least-mean-square block (LMS) 11. This least-mean-square block 11 basically calculates the difference between the output of the equalizer 8 and the output of the PRML-detector 9 after refiltering by a target filter (TF) 10. Based on this difference the least-mean-square block 11 adjusts the coefficients of the equalizer 8. The bit recovery block 7 passes the data to a demodulation block (DEM) 12, which further receives the clock signal from the clock recovery block 4 and sends the demodulated data to an error correction control (ECC; not shown) for further processing.

It is an object of the invention to propose a method for handling defects on a recording medium which deteriorate an adaptive bit recovery process.

According to the invention, this is achieved by a method for bit recovery from a recording medium, whereby a data stream read from the recording medium is processed by an adaptive bit recovery means, including the steps of:
- storing fallback values for the adaptive bit recovery means in a fallback register during processing of the data stream, and
- using the stored fallback values for the adaptive bit recovery means for recovering from an incorrect adaptation or for restarting after processing of a defect.
During reproduction of the data stream from the recording medium signals such as the envelope of the data pattern or the adaptation coefficients of the adaptive bit recovery means are monitored. This makes it possible to detect certain error levels. At the same time, during the continuous processing of the incoming data stream certain values of the adaptation coefficients and/or target values are stored in a fallback register. These stored fallback values are used for recovering from a incorrect adaptation or for restarting after a corrupt data area. In this way a fast recovery of the adaptation after the occurrence of a defect is ensured.

Favorably, the method further includes the step of repeatedly updating the stored fallback values for the adaptive bit recovery means during processing of the data stream. This ensures that the fallback register always contains the most recent fallback values, which in general are the most appropriate start values for the adaptation process after the occurrence of a defect.

Advantageously, the method further includes the step of filtering the fallback values before storing, which allows to obtain the best fitting mean values for the fallback values.

According to a favorable modification of the invention, the method further includes the step of monitoring the envelope of the data stream for obtaining a defect indication. This is, for example, achieved by comparing the upper and/or the lower envelope of the data stream with a plurality of reference levels. A further possible solution consists in checking for crossing and/or a close match of upper envelope and the lower envelope of the data stream. The envelope of the data stream is strongly influenced by errors. Therefore, by monitoring the envelope a very reliable and fast reaction to defects is achieved.

According to another favorable modification of the invention, the method further includes the step of monitoring the fallback values for the adaptive bit recovery means for obtaining a defect indication. For example, a rapid change of the adaptation coefficients indicates an increased error rate, which is a strong indication of a defect. For the implementation it is sufficient to focus on the adaptation coefficient which is most affected by defects. Of course, the remaining adaptation coefficients can be monitored as well.

Favorably, the method further includes the step of providing additional error detection means for obtaining an indication of the type of defect on the recording medium and/or for improving the reliability of the defect indication. Depending on the type of defect different counter measures can be initiated, i.e. different recovery strategies are used, which are optimized for the specific defect. Furthermore, the additional error detection means allow an independent confirmation of the occurrence of a defect, which increases the reliability of the defect handling.

Advantageously, the method further includes the step of storing a plurality of fallback values for different defect conditions. In this way the flexibility of the defect handling is increased. For example, a scratch within a fingerprint area is handled better when fallback coefficients for the specific upper and lower envelope distance are used, which are different from the coefficients obtained with the full level dynamic range of the data pattern.

Favorably, latency memory is provided before the adaptive bit recovery means and/or before the fallback register. This helps to 'read ahead', i.e. to gain time for initiating supportive measures, e.g. to disable the adaptation or to prepare the adaptation process for the specific type of defect.

Advantageously, the adaptive bit recovery means is a partial response maximum likelihood detector. In this case the fallback values include adaptation coefficients and target values.

A method according to the invention is favorably performed by a device for handling defects on a recording medium during bit recovery from the recording medium.

Advantageously, an apparatus for reading from and/or writing to recording media uses a method or includes a device according to the invention for handling defects on a recording medium during bit recovery from the recording medium. This might, for example, be an apparatus for reading from and/or writing to optical recording media, which due to their exchangeability are more error-prone than fixed recording media. However, the invention is also applicable to these type of recording media.

For a better understanding of the invention, an exemplary embodiment is specified in the following description with reference to the figures. It is understood that the invention is not limited to this exemplary embodiment and that specified features can also expediently be combined and/or modified without departing from the scope of the present invention. In the figures:
- Fig. 1: shows typical waveforms of retrieved data patterns having defects;
- Fig. 2: shows the architecture of a data recovery circuit;
- Fig. 3: shows some effects of defects on the data recovery circuit;
- Fig. 4: depicts an exemplary embodiment of a device according to the invention;
- Fig. 5: shows an implementation of an envelope monitor;
- Fig. 6: shows an implementation of a peak detector;
- Fig. 7: outlines a possible implementation of a leaky hold register;
- Fig. 8: depicts an approach for generating defect signals;
- Fig. 9: shows an implementation of an envelope monitoring;
- Fig. 10: outlines an excerpt of a control process;
- Fig. 11: depicts monitoring of coefficients on defects;
- Fig. 12: shows a further refinement of the invention using additional latency memory; and
- Fig. 13: depicts another implementation of a combined channel data and coefficient value error monitoring.

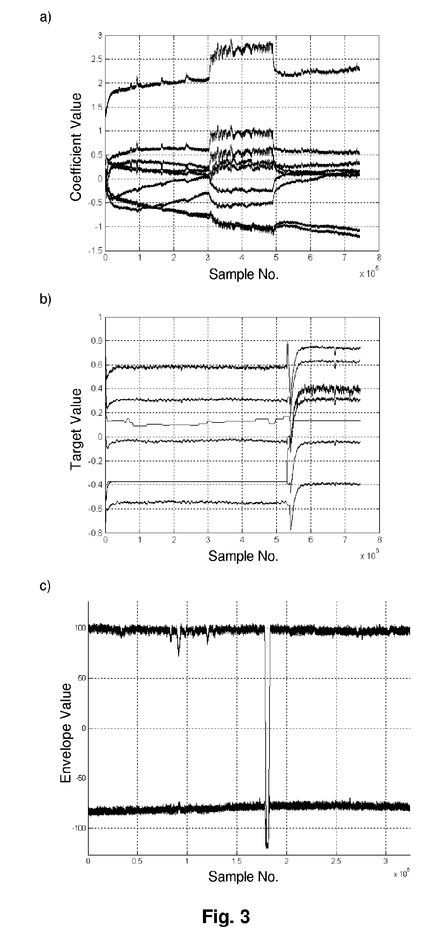

In Fig. 3 some effects of the defects on the data recovery circuit 1 are shown. In Fig. 3a) the adapted coefficient set of the equalizer 8 is depicted while running over a fingerprint area. The error rate is highest at the transition between the clean area and the fingerprint area. Fig. 3b shows possible transitions of the adaptive target values in case of a scratch if the target values of the PRML detector 9 are kept adaptive in the scratch area. Finally, Fig 3c) shows the envelope of a data pattern containing a black dot defect.

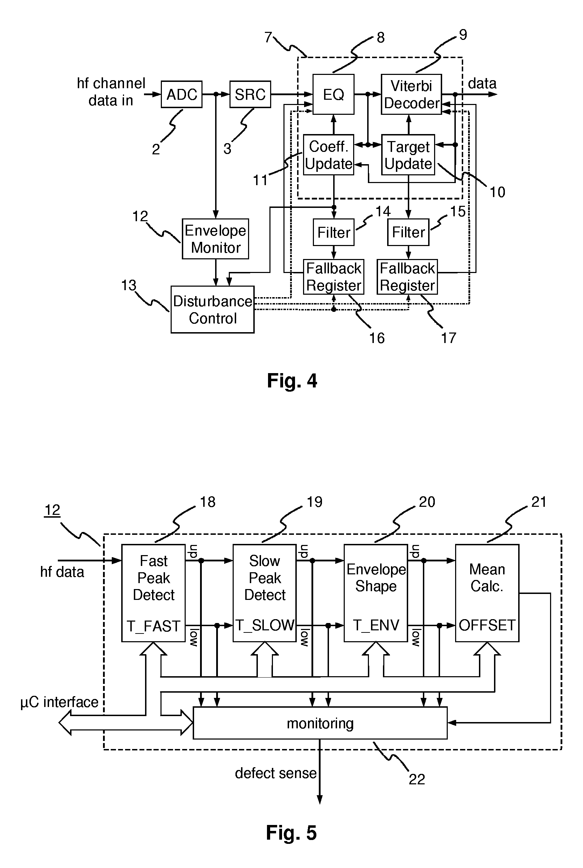

An exemplary embodiment of a device according to the invention is shown in Fig. 4. Data signal paths are depicted in solid lines, while control signal paths are depicted in dash-dotted lines. The detected data stream hf passes through the analog-to-digital converter 2 and the sample rate converter 3 and reaches the bit recovery block 7. The bit recovery block 7 consists of an adaptive equalizer (EQ) 8 and an adaptive Viterbi decoder 9, which constitutes an improved implementation of the PRML-detector of Fig. 2. During the continuous processing of the incoming data stream hf certain values of the coefficients and target values, which are updated in a coefficient update 11 and a target value update 10, respectively, are stored as fallback values in fallback registers 16, 17 for recovering from an incorrect adaptation or for restarting after processing a corrupt data area. The fallback values are favorably filtered by respective filters 14, 15 to obtain the best fitting mean values. In addition, an envelope monitor 12 provides signals indicating the detection of defects, which allow a disturbance control 13 to initiate supportive measures.

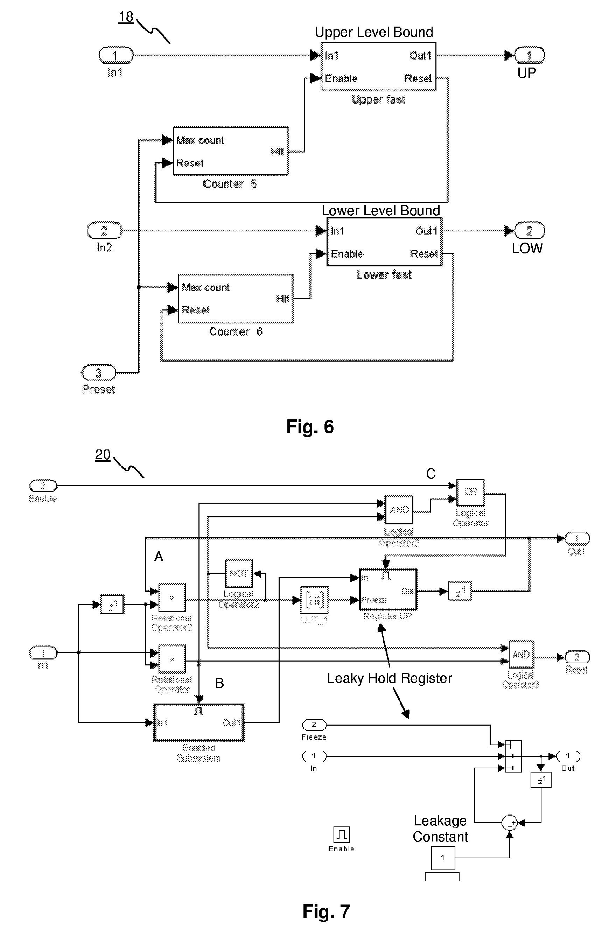

A possible implementation of the envelope monitor 12 is shown in Fig. 5. The envelope monitor 12 mainly consists of two peak detectors 18, 19, an envelope shaper 20 and a monitoring means 22. A mean value calculation by a mean value calculator 21 based on the envelope allows monitoring of a possible DC offset of the data stream hf, which would cause range clipping. This offset compensation loop shall not be further described here. By a separate micro-controller (µC) interface access to a host control is provided for setting the respective parameters and for obtaining the current value of a specific envelope or the mean value. The peak detectors 18, 19 and the envelope shaper 20 are basically all counters with different preset values and update registers with leakage implemented for the upper and lower envelope, which is depicted in Fig. 6. The counters ensure that not every sample is considered and, therefore, perform a subsampling. This is either done separately for each envelope level, as in Fig. 6, or combined as one hold time counter.

Fig. 7 outlines a possible implementation of a leaky hold register considering as example the upper envelope level bound. Basically a value kept in a hold register is compared with input samples. According to a first condition, as soon as the hold register content is smaller than the incoming samples (A) and a rising edge of the incoming data stream is detected (B), the hold register is updated. According to a second condition, for checking the hold value the hold time distance is considered, in order to ensure register updates for signals were the edges are disturbed due to too large noise ((C) and (A)). This timer is reset as soon as a register update is performed. The hold register decreases its value with every sample, which is the so-called leakage, to prevent holding values exceeding the regular data range, e.g. due to noise. This basically has the effect of a rubber band around the input samples or the leakage of a capacitance in an analog filter.
It is supposed that the hold time, the leakage constant and the initial hold register values are accessible by the host control for proper initialization.

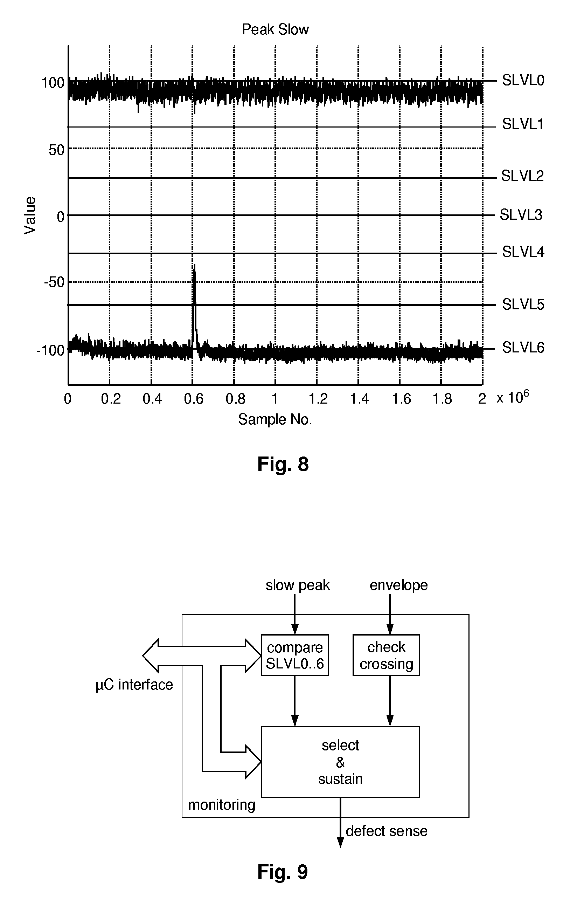

The monitoring means 22 provides a defect signaling to the disturbance control 13. An approach for generating defect signals is shown in Fig. 8. The slow peak signal, i.e. a faster representation of the upper and the lower envelope, is compared with several steepness levels SLVL0...6 (reference levels). For obtaining a signal indicating the detection of a decreasing peak the comparison is done on the separated steepness values. A defect warning is signaled if one level is crossed. As the steepness exceeds more levels a defect signal is generated.

An implementation of such a scheme is shown in Fig. 9. In addition to the above approach, a crossing or at least a close match of the upper and the lower envelope gives a defect indication which occurs, for example, during black or silver dots. These signals may be too short for detection or not sufficiently clear for signaling. Therefore, a signal selector and loadable sustain counter is added. For example, a comparator can be used as selector, which compares the detected error signals with a sensitivity level. This can be implemented as an "OR" operation indicating every detected problem or as a state machine having host controlled sensitivity levels, i.e. allowing peak failures but disallowing envelope collision. The sustain signaling favorably is a triggered counter for expanding the error signals. Otherwise the selector might erroneously indicate several short errors instead of a longer error which allows for a proper reaction timing.

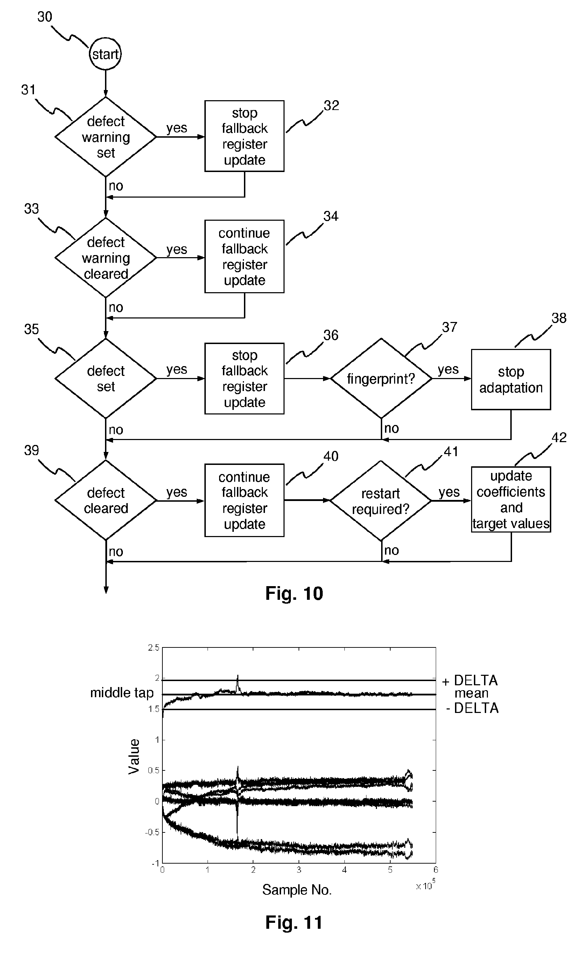

The disturbance control 13 monitors these defect signals and issues notifications to the host control. Favorably it also starts self controlled precaution measures to overcome the defect area. An excerpt of such a control process in shown in Fig. 10. After initialization (start) 30 the process checks for error conditions. In the example a first condition is the defect warning flag. If this flag is set 31 the fallback register update is frozen 32. If later on this flag is cleared 33, the process continues the register update 34. Next, if a defect flag is set 35 this also leads to a stop 36 of the fallback register update. A comparison 37 is then performed if other error detection means show specific error patterns, e.g. a fingerprint pattern, which requires to inhibit the channel adaptation at least for a certain time. Again, when later on the defect flag is cleared 39 these measures are also terminated and the process continues the fallback register update 40. In case a restart is required 41 the coefficients and target values are updated 42.

As an additional control mechanism the defect signals can be verified by monitoring the adaptation of the coefficients and target values. For example, a rapid change of the coefficients indicates an increased error rate and, therefore, serves as additional information for maintaining fallback register updates. An example is shown in Fig. 11. For the implementation it is sufficient to focus on the middle tap, which contains the highest values and, therefore, has the largest impact. Of course, the remaining taps can be monitored as well. The applied DELTA value determines the host controlled sensitivity level. A violation of the boundary given by the DELTA around the mean value results in an error condition. The mean value itself represents the coefficient value of the middle tap in the state of a clean convergence of the adaptive equalizer or - ideally - represents the initial coefficient value for the middle tap that was loaded by the host control matching closely the real behavior of the hf channel.

Another advantageous expansion of this control is to keep multiple fallback values for the coefficients or target values for different envelope levels. For example, a scratch within a fingerprint area is tackled easier when fallback coefficients for the specific upper and lower envelope distance are used, which are different from the coefficients obtained with the full level dynamic range of the data pattern.

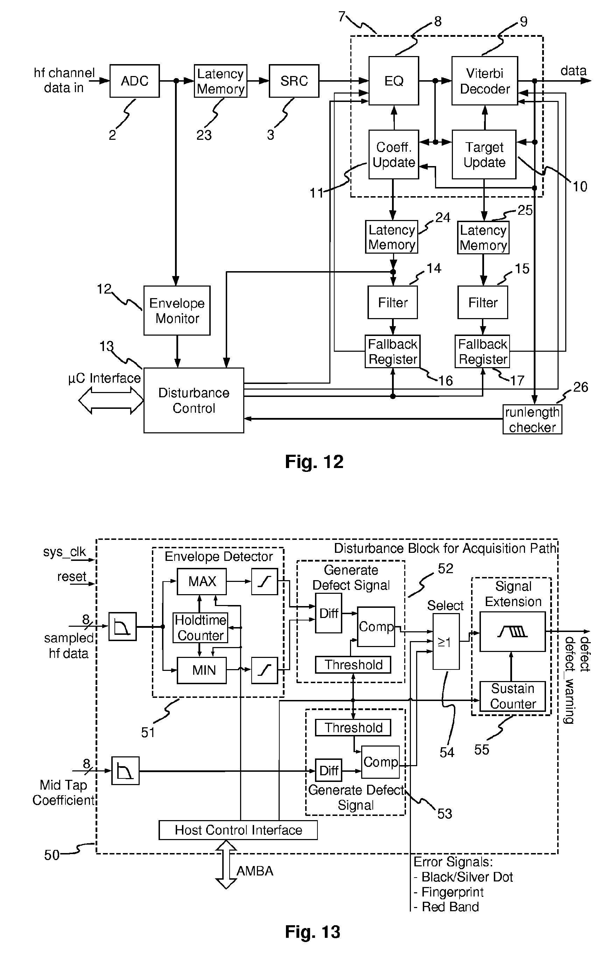

A further refinement of the invention is depicted in Fig. 12. Additional latency memory 23, 24, 25 is provided for improving the benefits of knowing the behavior of the data pattern in advance. In this way the disturbance control 13 can, for example, decide to switch off the adaptation. A first latency memory 23 is favorably provided before the sample rate converter 3, while a second latency memory 24 and a third latency memory 25 are provided before the filters 14, 15 and the fallback registers 16, 17. The first latency memory 23 allows to reconfigure the adaptation process in accordance with the expected defect, the second and third latency memories 24, 15 give time to discard fallback updates during defective areas. In addition, by considering other defect warning mechanisms, such as checking minimum and maximum runlengths of the bit recovery output with a runlength checker 26, the control mechanism performed by the disturbances control 13 might be revised. For example, it might be required to allow an adaptation restart using a different set of coefficients or target values. However, this is favorably performed in conjunction with the host control of the system via the µC interface.

Another implementation of a combined channel data and coefficient value error monitoring block 50 is shown in Fig. 13. A prefiltered data stream hf is processed by an envelope detector 51 for generating the signal envelope, which is used for obtaining the defect signals with a first defect signal generation block 52. In parallel, the middle tap coefficient value is prefiltered and compared with a host controlled threshold value (the DELTA of Fig. 11) by a second defect signal generation block 53 for obtaining further error signals. A selector 54 checks the error indications. The resulting error signal is sustained by a triggered sustain counter 55 and passed to the disturbance control 13.

## Claims

1. Method for handling defects on a recording medium during bit recovery from the recording medium, whereby a data stream (hf) read from the recording medium is processed by an adaptive bit recovery means (7), **including** the steps of:
- storing fallback values for the adaptive bit recovery means (7) in a fallback register (16, 17) during processing of the data stream (hf), and
- updating the adaptive bit recovery means (7) with the stored fallback values for recovering from an incorrect adaptation or for restarting after processing of a defect.

2. Method according to claim 1, **further** including the step of repeatedly updating the stored fallback values for the adaptive bit recovery means (7) during processing of the data stream (hf).

3. Method according to claim 1 or 2, **further** including the step of filtering the fallback values before storing.

4. Method according to one of claims 1 to 3, **further** including the step of monitoring the envelope of the data stream (hf) for obtaining a defect indication.

5. Method according to claim 5, **characterized in that** the step of monitoring the envelope of the data stream (hf) for obtaining a defect indication includes comparing the upper and/or the lower envelope of the data stream (hf) with a plurality of reference levels.

6. Method according to claim 4 or 5, **characterized in that** the step of monitoring the envelope of the data stream (hf) for obtaining a defect indication comprises checking for crossing and/or a close match of upper envelope and the lower envelope of the data stream (hf).

7. Method according to anyone of the preceding claims, **further** including the step of monitoring the fallback values for the adaptive bit recovery means (7) for obtaining a defect indication.

8. Method according to anyone of the preceding claims, **further** including the step of obtaining an indication of the type of error on the recording medium for improving the reliability of the defect indication.

9. Method according to anyone of the preceding claims, **further** including the step of storing different fallback values for different defect conditions.

10. Method according to anyone of the preceding claims, **further** including the step of providing a latency memory (23, 24, 25) before the adaptive bit recovery means (7) and/or before the fallback register (16, 17).

11. Method according to anyone of the preceding claims, **characterized in that** the adaptive bit recovery means (7) is a partial response maximum likelihood detector.

12. Method according to anyone of the preceding claims, **characterized in that** the fallback values include coefficients and target values.

13. Device for handling defects on a recording medium during bit recovery from the recording medium, **including:**
- an adaptive bit recovery means (7) for processing a data stream (hf) read from the recording medium;
- a fallback register (16, 17) for storing fallback values for the adaptive bit recovery means (7) during processing of the data stream (hf), and
- means for updating the adaptive bit recovery means (7) with the stored fallback values for recovering from an incorrect adaptation or for restarting after processing of a defect.

14. Apparatus for reading from and/or writing to recording media, **characterized in that** it uses a method according to anyone of claims 1 to 12 or includes a device according to claim 13 for handling defects on a recording medium during bit recovery from the recording medium.
